# EUROPÄISCHE PATENTSCHRIFT

(11) **EP 3 064 893 B1**
(45) Veröffentlichungstag und Bekanntmachung des Hinweises auf die Patenterteilung: **24.04.2019**
(21) Anmeldenummer: 15157816.8
(22) Anmeldetag: 05.03.2015
(51) Int. Cl.: G01B 11/02, G06K 7/10

(54) **Optischer Sensor**
Optical sensor
Capteur optique

(43) Veröffentlichungstag der Anmeldung: 07.09.2016
(73) Patentinhaber: Leuze electronic GmbH + Co KG, 73277 Owen/Teck (DE)
(72) Erfinder: Müller, Thomas, 73119 Zell u.A. (DE); Aldiek, Norbert, 73230 Kirchheim/Teck (DE)
(74) Vertreter: Ruckh, Rainer Gerhard

(56) Entgegenhaltungen:
- DE-A1- 4 007 500
- US-A- 5 786 582
- US-A1- 2003 019 931
- US-A1- 2012 062 731
- US-A1- 2014 320 605

## Beschreibung

Die Erfindung betrifft einen optischen Sensor gemäß dem Oberbegriff des Anspruchs 1.

Ein derartiger optischer Sensor umfasst eine Empfangseinheit mit einem Bildsensor mit zugeordneter Empfangsoptik und eine dem Bildsensor zugeordnete Beleuchtungseinheit. Der Bildsensor besteht typischerweise aus einer Matrix mit Empfangselementen, wobei bevorzugt eine CMOS-Matrix oder eine CCD-Matrix zum Einsatz kommt. Dem so ausgebildeten Bildsensor ist eine Empfangsoptik zugeordnet, um von einem zu erfassenden Objekt reflektierte Lichtstrahlen auf den Bildsensor zu führen.

Derartige optische Sensoren können insbesondere zur Erfassung von Marken dienen, wobei die Marken beispielsweise als Barcodes oder 2D-Code mit zweidimensionalen Codemustem ausgebildet sein können. Generell können derartige Marken dann mit dem optischen Sensor erkannt werden, wenn diese innerhalb eines Lesebereichs zu diesem angeordnet sind oder insbesondere in einem definierten Leseabstand zu diesem angeordnet sind, wobei der Leseabstand durch den Brennpunkt der Empfangsoptik definiert ist.

Vor Aufnahme des Arbeitsbetriebs des optischen Sensors, in welchem Marken erfasst werden, ist eine Ausrichtung des optischen Sensors vorzunehmen, so dass der Lesebereich oder der Leseabstand für die jeweilige Applikation geeignet gewählt ist.

Für eine derartige Ausrichtung ist es bekannt, als optisches Hilfsmittel ein diffraktives optisches Element mit einem Laser als zugeordnete Lichtquelle einzusetzen. Mit dem diffraktiven optischen Element wird ein Projektionsbild erzeugt. Mittels eines Probekörpers wie zum Beispiel eines Schirmes, wird dann von einer Bedienperson geprüft, wo die Abbildung des Projektionsbilds am schärfsten ist. Das diffraktive optische Element ist dann vorteilhaft so ausgebildet, dass die schärfste Abbildung gerade in dem Leseabstand entsprechenden Brennpunkt der Empfangsoptik erhalten wird. Somit kann die Bedienperson die Einstellung des Leseabstands visuell prüfen.

Ein wesentlicher Nachteil hierbei besteht darin, dass die Optikanordnung zur Überprüfung des Leseabstands konstruktiv aufwändig und entsprechend kostenintensiv ist. Zunächst ist die Lichtquelle in Form des Lasers bereits kostenaufwändig. Weiterhin ist die Herstellung eines geeigneten diffraktiven optischen Sensors konstruktiv sehr aufwändig. Bereits die Berechnung der optischen Eigenschaften diffraktiven optischen Elementen erfordert einen hohen Aufwand. Schließlich sind erhebliche Werkzeugkosten zur Herstellung des diffraktiven optischen Elements erforderlich.

Schließlich ist nachteilig, dass mit dem diffraktiven optischen Sensor nur ein statisches Bild erzeugt werden kann. Für jede Optikvariante des optischen Sensors ist daher ein neues, separat herzustellendes diffraktives optisches Element erforderlich, was den Kostenaufwand weiter erhöht.

Die US 5 786 582 A betrifft eine optische Vorrichtung zum Lesen von ein- und zweidimensionalen Codes. Die Vorrichtung weist einen CCD-Detektor mit vorgeordneter Optik auf, um Codes in zwei Lesebereichen erkennen zu können. Die DE 40 07 500 A1 betrifft eine Vorrichtung zur Vermessung von Objektoberflächen. Die Vorrichtung umfasst eine Kamera und zwei Projektoren. Die Projektoren generieren Streifenmuster gleicher Periodizität, die auf die zu erfassende Objektoberfläche abgebildet werden. Aus den so generierten Kamerabildem werden Höheninformationen gewonnen.

Die US 2012/ 006 27 31 A1 betrifft einen optischen Sensor mit einer Kamera und einer zugeordneten Laser- Projektionskamera von 3D-Vermessung von Objekten.

Die US 2014/ 032 06 05 A1 betrifft eine Vorrichtung zur Bestimmung von 3D-Koordinaten einer Objektoberfläche. Die Vorrichtung umfasst ein Kamerasystem und eine Anordnung von Laser-Projektoren.

Die US 2003/001 99 31 A1 betrifft eine optische Sensoranordnung mit einem Kamerasystem und einer zugeordneten Beleuchtungseinheit, die insbesondere zwei beabstandete Projektoren aufweist. Die Projektoren sind so ausgebildet, dass auf der zu detektierenden Objektoberfläche eine homogene Lichtverbreitung erhalten wird.

Der Erfindung liegt die Aufgabe zugrunde, einen optischen Sensor der eingangs genannten Art bereitzustellen, welcher bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten. Der optische Sensor umfasst eine Empfangseinheit mit wenigstens einen Bildsensor und eine dem Bildsensor zugeordnete Beleuchtungseinheit. Die Beleuchtungseinheit weist wenigstens zwei in unterschiedlichen Positionen zum Bildsensor angeordnete Projektionsmittel auf, welche jeweils ein Projektionsbild generieren. Die Projektionsbilder sind derart ausgebildet, dass mit dem Grad der Überlagerung der auf ein Objekt projizierten Projektionsbilder visualisiert ist, ob sich das Objekt innerhalb eines Lesefelds und/oder Leseabstands zum Bildsensor befindet oder nicht.

Der Grundgedanke der Erfindung besteht somit darin, zwei in unterschiedlichen Positionen zum Bildsensor angeordnete Projektionsmittel einzusetzen, mit welchen jeweils ein Projektionsbild erzeugt wird. Diese Projektionsbilder überlagern sich abstandsabhängig in eindeutiger Weise, das heißt in unterschiedlichen Abständen werden unterschiedliche Überlagerungen der Projektionsbilder erhalten. Daher kann eine Bedienperson aus dem Grad der Überlagerung der Projektionsbilder visuell exakt kontrollieren, wo sich der Lesebereich oder der Leseabstand des optischen Sensors befindet und den optischen Sensor entsprechend der jeweiligen Applikation geeignet ausrichten.

Gemäß einer besonders vorteilhaften Ausgestaltung der Erfindung sind die Projektionsbilder derart ausgebildet, dass deren Grad der Überlappung ein Maß für die Lage des Objekts im Lesebereich oder relativ zum Lesebereich darstellt.

Der Grad der Überlappung der Projektionsbilder liefert somit eine quantitative Aussage darüber, wo genau innerhalb des Lesebereichs sich das Objekt befindet oder auch wie weit oder in welcher Richtung das Objekt vom Lesebereich entfernt ist.

Besonders vorteilhaft erfolgt die Visualisierung der Projektionsbilder auf einem Probekörper in Form eines Schirms.

Damit kann eine Bedienperson den optischen Sensor besonders einfach ausrichten, damit darauffolgend der optische Sensor in seinem Arbeitsbetrieb Objekte innerhalb des Lesebereichs oder im Leseabstand erkennen kann. Besonders vorteilhaft ist der optische Sensor ausgebildet, Marken wie zum Beispiel Barcode oder 2D-Codes zu erfassen.

Gemäß einer zweckmäßigen Ausgestaltung, die nicht Teil der Erfindung ist, erfolgt bei dem optischen Sensor in einem vor dessen Arbeitsbetrieb durchgeführten Einrichtvorgang anhand von im Bildsensor oder in einem Prüfgerät generierten Prüfsignalen eine Korrektur der Projektionsmittel.

Damit ist gewährleistet, dass nachfolgend anhand der Projektionsbilder der optische Sensor exakt auf den jeweiligen Lesebereich oder Leseabstand ausgerichtet werden kann. Generell liefert dabei der Bildsensor oder auch das Prüfgerät in Form eines Kamerabilds Prüfsignale, anhand derer die Prüfbilder auf die Kamera justiert werden können. Prinzipiell kann zusätzlich ein Entfernungssensor vorgesehen sein, so dass anhand der vom Entfernungssensor generierten Entfernungssignale eine Korrektur des optischen Versatzes der Prüfbilder in Abhängigkeit der Entfernung vorgenommen werden kann.

Eine besonders günstige Ausgestaltung des optischen Sensors ist dadurch gekennzeichnet, dass die Projektionsmittel in gleichen Abständen beidseits des Bildsensors angeordnet sind, wobei baugleiche Projektionsmittel vorgesehen sind.

Bei dieser Anordnung liefert der Grad der Überlagerung der Projektionsmittel eine direkte abstandsabhängige Information und damit eine Information über den Lesebereich beziehungsweise Leseabstand.

Die Projektionsmittel selbst können von unterschiedlichen geometrischen Symbolen, Ziffern, Buchstaben beziehungsweise Folgen hiervon gebildet sein. Besonders vorteilhaft werden mit den Projektionsmitteln unterschiedliche Projektionsbilder erzeugt.

Überlagerungen dieser unterschiedlichen Projektionsbilder können von einer Bedienperson besonders gut verfolgt und analysiert werden.

Gemäß einer ersten Variante der Erfindung weist jedes Projektionsmittel eine Lichtquelle mit einem nachgeordneten Dia oder mit einer nachgeordneten Lochplatte auf.

Zudem sind zweckmäßig Optikelemente vorgesehen, um das Dia oder die Lochplatte mit dem Licht der Lichtquelle auszuleuchten und um eine Abbildung des mit dem Dia oder der Lochplatte generierten Projektionsbild zu generieren.

Diese Variante zeichnet sich durch einen besonders einfachen, kostengünstigen und robusten Aufbau der Projektionsmittel aus.

Weiterhin kann durch einen Austausch der Dias oder Lochtplatten auf einfache Weise eine Anpassung an unterschiedliche Applikationsbedingungen, insbesondere unterschiedliche Lesebereiche und Leseabstände erfolgen.

Schließlich können durch eine spezifische Ausbildung von einem Dia oder einer Lochplatte zugeordneten Objektelementen, beispielsweise in Form von Facettenlinsen, den Projektionsbildern des Dias oder der Lochplatte Zusatzinformationen überlagert werden, wodurch die Funktionalität der Anordnung erhöht wird.

Gemäß einer zweiten Variante der Erfindung weist jedes Projektionsmittel eine LCD-Anordnung oder eine OLED-Anordnung auf.

Dabei bilden LCD-Anordnungen im Durchlichtverfahren betriebene optische Elemente, während OLED-Anordnungen selbstleuchtende optische Elemente bilden.

Sowohl die LCD-Anordnungen als auch die OLED-Anordnungen bilden Elemente, die elektronisch angesteuert werden und demzufolge allgemein durch eine elektronische Ansteuerung unterschiedliche Projektionsbilder erzeugen können.

Damit ist auf besonders einfache Weise und insbesondere ohne jeglichen Austausch optischer Komponenten eine Anpassung an unterschiedliche Applikationsbedingungen und insbesondere an unterschiedliche Leseabstände oder Lesebereiche möglich.

Weiterhin ist vorteilhaft, dass durch eine geeignete elektronische Ansteuerung der LCD-Anordnung oder OLED-Anordnung auch eine Anpassung an unterschiedliche Gerätevarianten insbesondere Optikvarianten des Bildsensors möglich ist.

Generell wird mit den LCD-Anordnungen oder OLED-Anordnungen aufweisenden Projektionsmittel ein besonders einfacher, flexibel anpassbarer und kostengünstiger Aufbau des optischen Sensors realisiert.

Ein weiterer Vorteil besteht darin, dass mit der LCD-Anordnung oder der OLED-Anordnung farbige Projektionsbilder generiert werden.

So können beispielsweise mit den beiden Projektionsmitteln des optischen Sensors als Projektionsbild Muster mit mehreren Farben erzeugt werden. Dann ist vorteilhaft eine Überlagerung der Projektionsbilder durch einen Farbumschlag erkennbar.

Ein weiterer wesentlicher Vorteil dieser Variante besteht darin, dass die LCD-Anordnung beziehungsweise OLED-Anordnung eines Projektionsmittels elektronisch justiert werden kann, so dass kein mechanisches Ausrichten von Optikteilen im Fertigungsprozess erforderlich ist.

Weiterhin besteht für den Fall, dass zusätzlich ein Entfernungssensor im optischen Sensor vorgesehen ist, auch eine Möglichkeit der Korrektur des Versatzes oder mit den Projektionsmitteln erzeugten Projektionsbildern in Abhängigkeit der jeweiligen Entfernung.

Gemäß einer vorteilhaften Weiterbildung der Erfindung bildet eine oder jede LCD-Anordnung beziehungsweise OLED-Anordnung ein Mittel zur Ausgabe zusätzlicher Informationen.

Insbesondere erfolgt mit einer oder jeder LCD-Anordnung eine Ausgabe abstandsabhängiger Informationen.

Allgemein bildet dann eine oder jede LCD-Anordnung beziehungsweise OLED-Anordnung eine optische Anzeigeeinheit aus.

Beispielsweise kann mit einer solchen Anzeigeeinheit in einer Adjust-Mode ein Bargraph ausgegeben werden. Weiterhin kann mit der Anzeigeeinheit eine Fortschrittanzeige bei verschiedenen automatisiert ablaufenden Personen erfolgen. Schließlich kann mit der Anzeigeeinheit auch eine Textausgabe, insbesondere eine Ausgabe von Fehlermeldungen oder Abstandsinformationen erfolgen.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Erste Ausführungsform eines Projektionsmittels für den optischen Sensor gemäß Figur 1.
- Figur 3:: Zweite Ausführungsform eines Projektionsmittels für den optischen Sensor gemäß Figur 1.
- Figur 4a-c:: Darstellung erster mit den Projektionsmitteln des optischen Sensors gemäß Figur 1 generierter Projektionsbildern in unterschiedlichen Entfernungen zum optischen Sensor.
- Figur 5a-c:: Darstellung zweiter mit den Projektionsmitteln des optischen Sensors gemäß Figur 1 generierter Projektionsbildern in unterschiedlichen Entfernungen zum optischen Sensor.

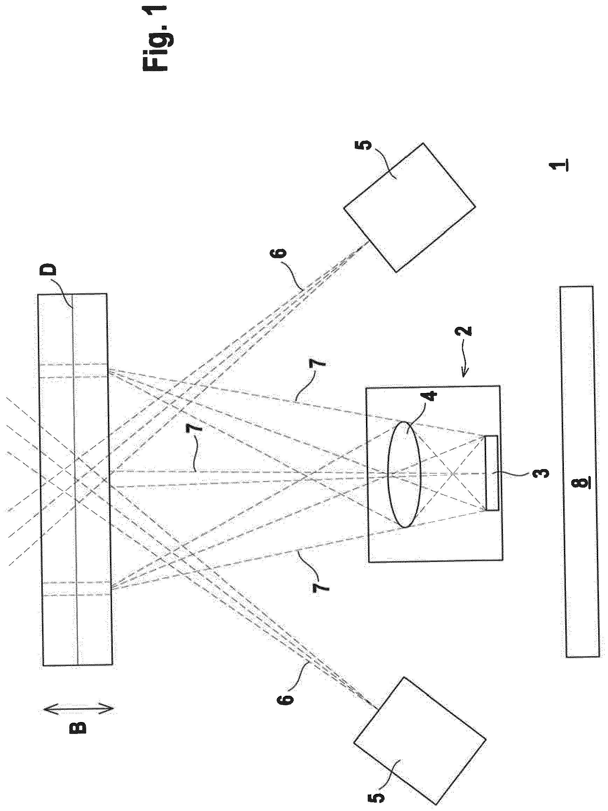

Figur 1 zeigt ein Ausführungsbeispiel des erfindungsgemäßen optischen Sensors 1. Der optische Sensor 1 dient im vorliegen Fall zur Erfassung von Marken, insbesondere Barcodes oder 2D-Codes.

Der optische Sensor 1 weist eine Empfangseinheit 2 mit einem Bildsensor 3 und einer vorgeordneten Empfangsoptik 4 auf. Der Bildsensor 3 weist eine matrixförmige Anordnung von Empfangselementen auf. Der Bildsensor 3 ist vorteilhaft von einem matrixförmigen CMOS-Sensor oder CCDE-Sensor gebildet. Die Empfangsoptik 4 besteht aus einer oder mehreren Linsen 10, 14.

Der Empfangseinheit 2 sind als Beleuchtungseinheit zwei Projektionsmittel 5 zugeordnet. Die Projektionsmittel 5 sind baugleich ausgebildet und in gleichen Abständen beidseits des Bildsensors 3 angeordnet. Die optischen Achsen der Projektionsmittel 5 sind jeweils im Scheimpflug-Winkel zur optischen Achse der Bildsensor 3 beziehungsweise der Empfangseinheit 2 angeordnet.

Die Projektionsmittel 5 bilden generell lichtemittierende Elemente, wobei mit jedem Projektionsmittel 5 ein Projektionsbild erzeugt. Figur 1 zeigt schematisch den Strahlengang der von den Projektionsmitteln 5 ausgehenden Sendelichtstrahlen 6 und der von einem nicht dargestellten Objekt zurückreflektierten Empfangslichtstrahlen 7.

Wie aus Figur 1 ersichtlich schneiden sich die Sendelichtstrahlen 6 innerhalb eines Lesebereichs B. Innerhalb dieses Lesebereichs B angeordnete Marken können mit dem optischen Sensor 1 erfasst werden.

Eine optimale Erkennung ist im Leseabstand D möglich, der dem Brennpunkt der Empfangseinheit 2 entspricht.

Der optische Sensor 1 weist weiterhin eine Steuer- und Auswerteeinheit 8 auf. Die Steuer- und Auswerteeinheit 8 ist beispielsweise von einem Mikroprozessor gebildet und dient zur Ansteuerung von Komponenten des optischen Sensors 1. Zudem werden in der Steuer- und Auswerteeinheit 8 die in der Empfangseinheit 2 generierten Empfangssignale zur Erkennung der Marken ausgewertet.

Die Komponenten des optischen Sensors 1 können in einem nicht dargestellten Gehäuse integriert sein.

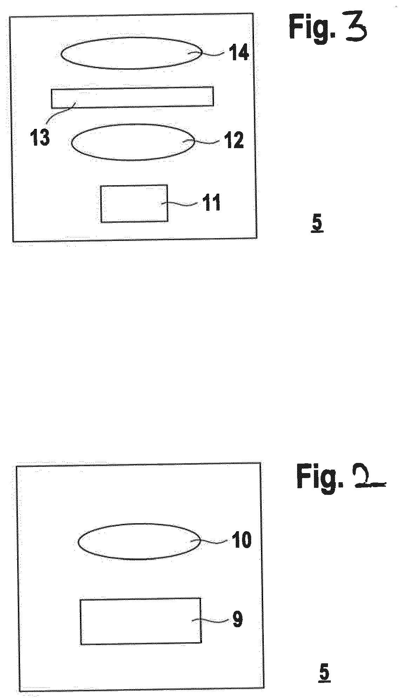

Figur 2 zeigt ein erstes Ausführungsbeispiel der Projektionsmittel 5 für den optischen Sensor 1 gemäß Figur 1. Die Projektionsmittel 5 umfassen in diesem Fall eine LCD-Anordnung 9 und eine nachgeordnete abbildende Optik in Form einer Linse 10. Anstelle einer LCD-Anordnung 9 kann auch eine OLED-Anordnung eingesetzt werden.

Die LCD-Anordnung 9 wird von der Steuer- und Auswerteeinheit 8 elektronisch angesteuert. Durch diese Ansteuerung kann die LCD-Ansteuerung unterschiedliche Projektionsbilder erzeugen. Weiterhin kann die LCD-Ansteuerung derart angesteuert werden, dass diese eine Anzeigeeinheit, insbesondere zur Textanzeige, ausbildet.

Figur 3 zeigt ein zweites Ausführungsbeispiel der Projektionsmittel 5 für den optischen Sensor 1 gemäß Figur 1. Die Projektionsmittel 5 umfassen im vorliegenden Fall eine Lichtquelle 11, deren Licht über eine erste Linse 12 auf ein Dia 13 geführt wird, welches ein Projektionsbild generiert. Dem Dia 13 ist eine abbildende Optik in Form einer weiteren Linse 14 nachgeordnet. Durch Austausch des Dias 13 gegen andere Dias 13 kann eine Variation der Projektionsbilder erfolgen. Anstelle eines Dias 13 kann auch eine Lochplatte oder dergleichen vorgesehen sein.

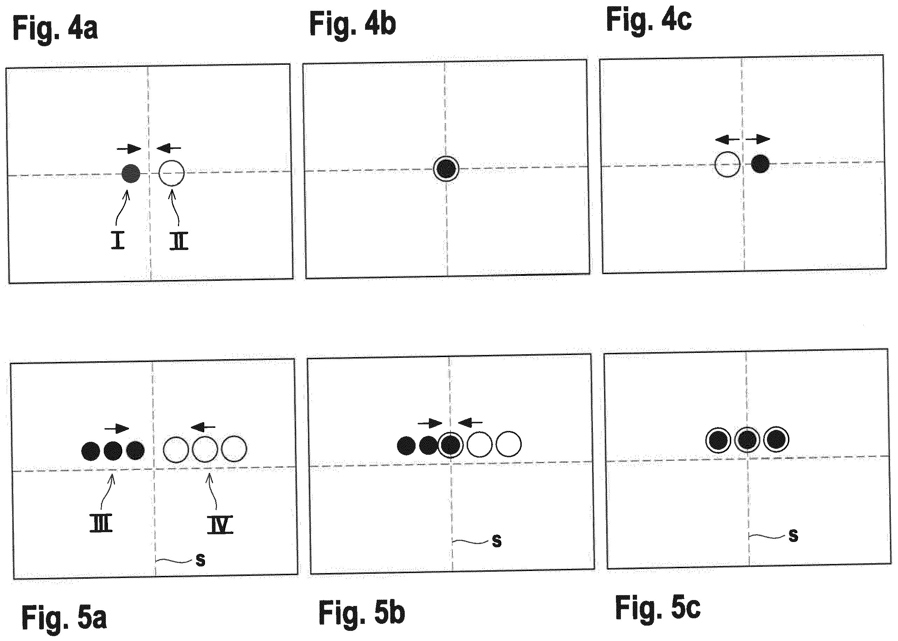

Die Figuren 4a-4c zeigen ein erstes Ausführungsbeispiel von Projektionsbildern, die mit den optischen Sensoren 1 gemäß Figur 1 erzeugt werden. Das mit den ersten Projektionsmitteln 5 erzeugte Projektionsbild ist in Form eines Vollkreises ausgebildet, in Figur 4a mit I bezeichnet. Das mit den zweiten Projektionsmitteln erzeuge Projektionsbild ist in Form einer Kreislinie ausgebildet, in Figur 4b mit II bezeichnet. Die unterschiedlichen Projektionsbilder der beiden Projektionsmittel 5 werden bei der Ausführungsform der Figur 2 durch eine unterschiedliche Ansteuerung der LCD-Ansteuerung und bei der Ausführungsform der Figur 3 durch Verwendung verschiedener Dias 13 erzeugt.

Mit diesen Projektionsmitteln 5 kann von einer Bedienperson visuell überprüft werden, wo sich der Leseabstand D des optischen Sensors 1 befindet, um dann abhängig hiervon den optischen Sensor entsprechend der jeweiligen Applikation auszurichten. Die Bedienperson kann die Projektionsbilder dadurch optisch kontrollieren, in dem sie in verschiedenen Abständen einen Schirm als Probekörper in den Strahlengang des optischen Sensors 1 hält.

Die Figuren 4a bis 4c zeigen die Projektionsbilder in drei unterschiedlichen Abständen des Schirms relativ zum optischen Sensor 1. Bild 4a zeigt die Lage der Projektionsbilder, wenn der Schirm in einem Abstand kleiner als der Leseabstand D angeordnet ist. In diesem Fall liegt der Vollkreis I links in Abstand zur Kreislinie II.

Bild 4c zeigen den Fall, wenn der Schirm in einem Abstand größer als der Leseabstand D angeordnet ist. Dann liegt der Vollkreis I rechts in Abstand zur Kreislinie.

Schließlich zeigt Figur 4b den Fall, wenn sich der Schirm exakt im Leseabstand D befindet. Dann liegt der Vollkreis I exakt in der Kreislinie II.

Somit kann die Bedienperson einfach und exakt visuell überprüfen, wo exakt der Leseabstand D des optischen Sensors 1 liegt.

Die Figuren 5a bis 5c zeigen eine Erweiterung des Ausführungsbeispiels der Figuren 4a bis 4c. In diesem Fall erzeugen die ersten Projektionsmitteln 5 ein Projektionsbild in Form einer Linearanordnung von drei identischen Vollkreisen, in Figur 5a mit III bezeichnet. Entsprechend erzeugen die zweiten Projektionsmitteln 5 ein Projektionsbild in Form einer Linearanordnung von drei identischen Kreislinien, in Figur 5a mit IV bezeichnet.

Mit diesen Projektionsbildern kann nicht nur visualisiert werden, ob sich der Schirm im Leseabstand D befindet. Vielmehr kann auch visualisiert werden, ob sich der Schirm innerhalb des Lesebereichs B befindet. Dies ist in den Figuren 5a bis 5c veranschaulicht.

Figur 5a zeigt denn Fall, wenn sich der Schirm in einer Entfernung unterhalb der unteren Grenze des Lesebereichs B befindet. Dann liegen diese Vollkreise III links in Abstand zu den Kreislinien IV.

Für den Fall, dass der Schirm in einem Abstand oberhalb der oberen Grenze des Lesebereichs B angeordnet ist, ergibt sich ein zur Symmetrieachse S gespiegeltes Bild von Figur 5a.

Figur 5b zeigt den Fall, wenn sich der Schirm an der unteren Grenze des Lesebereichs B befindet. Die Projektionsbilder sind so gewählt, dass dann der rechte Vollkreis des ersten Projektionsbilds innerhalb der linken Kreislinie des zweiten Projektionsbilds liegt.

Für den Fall, dass sich der Schirm an der oberen Grenze des Lesebereichs B befindet, ergibt sich ein zur Symmetrieachse S gespiegeltes Bild von Figur 5b. Schließlich zeigt Figur 5c den Fall, wenn sich der Schirm exakt im Leseabstand D befindet. Die Projektionsbilder sind so gewählt, dass dann alle Vollkreise innerhalb jeweils einer Kreislinie liegen.

Somit kann eine Bedienperson exakt den gesamten Lesebereich B und auch den Leseabstand D visualisieren.

### Bezugszeichenliste

- (1): Optischer Sensor
- (2): Empfangseinheit
- (3): Bildsensor
- (4): Empfangsoptik
- (5): Projektionsmittel
- (6): Sendelichtstrahlen
- (7): Empfangslichtstrahlen
- (8): Steuer- und Auswerteeinheit
- (9): LCD-Anordnung
- (10): Linse
- (11): Lichtquelle
- (12): Linse
- (13): Dia
- (14): Linse
- (B): Lesebereich
- (D): Leseabstand
- (S): Symmetrieachse

## Patentansprüche

1. Optischer Sensor (1) zur Erfassung von Objekten, mit einer Empfangseinheit (2) umfassend wenigstens einen Bildsensor (3), und mit einer dem Bildsensor (3) zugeordneten Beleuchtungseinheit, die wenigstens zwei in unterschiedlichen Positionen zum Bildsensor (3) angeordnete Projektionsmittel (5) aufweist, welche jeweils ein Projektionsbild generieren, **dadurch gekennzeichnet, dass** die Projektionsbilder derart ausgebildet sind, dass mit dem Grad der Überlagerung der auf ein Objekt projizierten Projektionsbilder visualisiert ist, ob sich das Objekt innerhalb eines Lesefelds und/oder Leseabstands (D) der Empfangseinheit (2) zum Bildsensor (3) befindet oder nicht.

2. Optischer Sensor nach Anspruch 1, **dadurch gekennzeichnet, dass** die Projektionsbilder derart ausgebildet sind, dass deren Grad der Überlappung ein Maß für die Lage des Objekts im Lesebereich (B) oder relativ zum Lesebereich (B) darstellt.

3. Optischer Sensor nach Anspruch 1 oder 2, **dadurch gekennzeichnet, dass** die Projektionsbilder auf einem Probekörper in Form eines Schirms dargestellt sind.

4. Optischer Sensor nach einem der Ansprüche 1 bis 3, **dadurch gekennzeichnet, dass** die Projektionsmittel (5) in gleichen Abständen beidseits des Bildsensors (3) angeordnet sind.

5. Optischer Sensor nach einem der Ansprüche 1 bis 4, **dadurch gekennzeichnet, dass** mit den Projektionsmitteln (5) unterschiedliche Projektionsbilder erzeugt werden.

6. Optischer Sensor nach einem der Ansprüche 1 bis 5, **dadurch gekennzeichnet, dass** baugleiche Projektionsmittel (5) vorgesehen sind.

7. Optischer Sensor nach Anspruch 6, **dadurch gekennzeichnet, dass** jedes Projektionsmittel (5) eine Lichtquelle mit einem nachgeordneten Dia (13) oder mit einer nachgeordneten Lochplatte aufweist.

8. Optischer Sensor nach Anspruch 7, **dadurch gekennzeichnet, dass** das Dia (13) oder die Lochplatte gegen ein anderes Dia (13) oder eine andere Lochpatte austauschbar ist.

9. Optischer Sensor nach Anspruch 6, **dadurch gekennzeichnet, dass** jedes Projektionsmittel (5) eine LCD-Anordnung (9) oder eine OLED-Anordnung aufweist.

10. Optischer Sensor nach Anspruch 9, **dadurch gekennzeichnet, dass** mit der LCD-Anordnung (9) oder der OLED-Anordnung farbige Projektionsbilder generiert werden.

11. Optischer Sensor nach einem der Ansprüche 9 oder 10, **dadurch gekennzeichnet, dass** die LCD-Anordnung oder OLED-Anordnung zur Generierung unterschiedlicher Projektionsbilder elektronisch angesteuert ist.

12. Optischer Sensor nach Anspruch 11, **dadurch gekennzeichnet, dass** durch die elektronische Ansteuerung der LCD-Anordnung (9) unterschiedliche Projektionsbilder generiert werden und/oder eine Justage eines Projektionsbilds erfolgt.

13. Optischer Sensor nach einem der Ansprüche 9 bis 12, **dadurch gekennzeichnet, dass** eine oder jede LCD-Anordnung (9) beziehungsweise OLED-Anordnung ein Mittel zur Ausgabe zusätzlicher Informationen bildet.

14. Optischer Sensor nach Anspruch 13, **dadurch gekennzeichnet, dass** mit einer oder jeder LCD-Anordnung (9) eine Ausgabe abstandsabhängiger Informationen erfolgt.

15. Optischer Sensor nach einem der Ansprüche 13 oder 14, **dadurch gekennzeichnet, dass** eine oder jede LCD-Anordnung (9) beziehungsweise OLED-Anordnung eine optische Anzeigeeinheit ausbildet.

## Claims

1. An optical sensor (1) for detecting objects, having a receiving unit (2) comprising at least one image sensor (3), and having an illumination unit assigned to the image sensor (3), which has at least two projection means (5) which are arranged in different positions with respect to the image sensor (3) and which each generate a projection image, **characterised in that** the projection images are formed such that the degree of superposition of the projection images projected onto an object is visualised, regardless whether the object is located within a reading field and/or reading distance (D) of the receiving unit (2) to the image sensor (3) or not.

2. The optical sensor according to Claim 1, **characterised in that** the projection images are formed in such a manner that their degree of overlap represents a measure of the position of the object in the reading region (B) or relative to the reading region (B).

3. The optical sensor according to claim 1 or 2, **characterised in that** the projection images are represented on a specimen in the form of a screen.

4. The optical sensor according to one of claims 1 to 3, **characterised in that** the projection means (5) are arranged at equal distances on both sides of the image sensor (3).

5. The optical sensor according to one of claims 1 to 4, **characterised in that** different projection images are produced with the projection means (5).

6. The optical sensor according to one of claims 1 to 5, **characterised in that** identical projection means (5) are provided.

7. The optical sensor according to claim 6, **characterised in that** each projection means (5) comprises a light source with a downstream slide (13) or with a downstream perforated plate.

8. The optical sensor according to claim 7, **characterised in that** the slide (13) or the perforated plate can be exchanged for another slide (13) or another perforated plate.

9. The optical sensor according to claim 6, **characterised in that** each projection means (5) comprises an LCD arrangement (9) or an OLED arrangement.

10. The optical sensor according to claim 9, **characterised in that** coloured projection images are generated with the LCD arrangement (9) or the OLED arrangement.

11. The optical sensor according to one of claims 9 or 10, **characterised in that** the LCD arrangement or OLED arrangement is electronically controlled for generating different projection images.

12. The optical sensor according to Claim 11, **characterised in that** different projection images are generated and/or a projection image is adjusted by the electronic control of the LCD arrangement (9).

13. The optical sensor according to any of claims 9 to 12, **characterised in that** one or each LCD array (9) or OLED array respectively forms a means for outputting additional information.

14. The optical sensor according to claim 13, **characterised in that** one or each LCD arrangement (9) is used to output distance-dependent information.

15. The optical sensor according to one of claims 13 or 14, **characterised in that** one or each LCD arrangement (9) or OLED arrangement forms an optical display unit.

## Revendications

1. Capteur optique (1) pour détecter des objets, ayant une unité de réception (2) comprenant au moins un capteur d'image (3) et ayant une unité d'éclairage assignée au capteur d'image (3), qui comporte au moins deux moyens de projection (5) qui sont disposés dans des positions différentes par rapport au capteur d'image (3) et qui génèrent chacun une image de projection, **caractérisé en ce que** les images de projection sont formées de telle sorte que le degré de superposition des images de projection projetées sur un objet soit visualisé, que l'objet soit situé dans un champ de lecture et/ou à une distance de lecture (D) de l'unité de réception (2) par rapport au capteur d'image (3) ou non.

2. Capteur optique selon la revendication 1, **caractérisé en ce que** les images de projection sont formées de telle sorte que leur degré de chevauchement représente une mesure de la position de l'objet dans la zone de lecture (B) ou par rapport à la zone de lecture (B).

3. Capteur optique selon la revendication 1 ou 2, **caractérisé en ce que** les images projetées sont représentées sur un échantillon sous la forme d'un écran.

4. Capteur optique selon l'une des revendications 1 à 3, **caractérisé en ce que** les moyens de projection (5) sont disposés à égale distance des deux côtés du capteur d'image (3).

5. Capteur optique selon l'une des revendications 1 à 4, **caractérisé en ce que** différentes images de projection sont produites avec le moyen de projection (5).

6. Capteur optique selon l'une des revendications 1 à 5, **caractérisé en ce que** des moyens de projection identiques (5) sont prévus.

7. Capteur optique selon la revendication 6, **caractérisé en ce que** chaque moyen de projection (5) comprend une source de lumière avec une diapo en aval (13) ou avec une plaque perforée en aval.

8. Capteur optique selon la revendication 7, **caractérisé en ce que** la diapo (13) ou la plaque perforée peut être remplacée par une autre diapo (13) ou une autre plaque perforée.

9. Capteur optique selon la revendication 6, **caractérisé en ce que** chaque moyen de projection (5) comprend un agencement LCD (9) ou un agencement OLED.

10. Capteur optique selon la revendication 9, **caractérisé en ce que** des images de projection colorées sont générées avec l'agencement LCD (9) ou l'agencement OLED.

11. Capteur optique selon l'une des revendications 9 ou 10, **caractérisé en ce que** l'agencement LCD ou OLED est commandé électroniquement pour générer différentes images de projection.

12. Capteur optique selon la revendication 11, **caractérisé en ce que** différentes images de projection sont générées et/ou une image de projection est réglée par la commande électronique de l'agencement LCD (9).

13. Capteur optique selon l'une quelconque des revendications 9 à 12, **caractérisé en ce qu'**un ou chaque réseau LCD (9) ou réseau OLED forment respectivement un moyen pour émettre des informations supplémentaires.

14. Capteur optique selon la revendication 13, **caractérisé en ce qu'**un ou chaque dispositif LCD (9) est utilisé pour délivrer des informations dépendantes de la distance.

15. Capteur optique selon l'une des revendications 13 ou 14, **caractérisé en ce qu'**un ou chaque agencement LCD (9) ou agencement OLED forment une unité d'affichage optique.
